(19) Europäisches Patentamt
European Patent Office
Office européen des brevets

(11) **EP 4 085 675 B1**

(12) **EUROPEAN PATENT SPECIFICATION**

(45) Date of publication and mention
of the grant of the patent:
**26.06.2024  Bulletin 2024/26**

(21) Application number: **20909470.5**

(22) Date of filing: **02.12.2020**

(51) International Patent Classification (IPC):
*H04W 12/04* (2021.01)    *H04L 9/40* (2022.01)
*H04L 9/08* (2006.01)

(52) Cooperative Patent Classification (CPC):
**H04L 63/162; H04L 9/0875; H04L 63/06;**
**H04W 12/04;** H04L 2209/80

(86) International application number:
**PCT/TR2020/051213**

(87) International publication number:
**WO 2021/137800 (08.07.2021 Gazette 2021/27)**

(54) **A SECURE COMMUNICATION METHOD**

SICHERES KOMMUNIKATIONSVERFAHREN

PROCÉDÉ DE COMMUNICATION SÉCURISÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **30.12.2019  TR 201922337**

(43) Date of publication of application:
**09.11.2022  Bulletin 2022/45**

(73) Proprietor: **Istanbul Medipol Universitesi**
**Istanbul (TR)**

(72) Inventors:
• **NADERI, Sanaz**
**34810 Beykoz/Istanbul (TR)**
• **ARSLAN, Hüseyin**
**34810 Beykoz/Istanbul (TR)**

(74) Representative: **Simsek, Meliha Merve**
**Incirli Cd.**
**Ulku Sk. No:12, B Blok, Daire:6**
**34145 Bakirkoy/Istanbul (TR)**

(56) References cited:
**US-A1- 2019 037 454    US-A1- 2019 327 262**

• **MELKI REEM ET AL: "Physical layer security**
**schemes for MIMO systems: an overview",**
**WIRELESS NETWORKS, ACM, 2 PENN PLAZA,**
**SUITE 701 - NEW YORK USA, vol. 26, no. 3, 14**
**June 2019 (2019-06-14), pages 2089-2111,**
**XP037059649, ISSN: 1022-0038, DOI:**
**10.1007/S11276-019-02060-0 [retrieved on**
**2019-06-14]**

## Description

## Technical Field

The present disclosure relates to a communication method for enhancing physical layer security. In this invention; a novel method for generating secret keys depending on a wireless channel is proposed.

## Background

The broadcast nature of wireless transmission causes vulnerability to the communication between legitimate transmitter and receiver in the presence of a passive eavesdropper. Since there is a great development in 5G and beyond wireless networks, classical encryption techniques might not be sufficient enough to ensure security. Techniques that generate keys using the characteristics of random channels should be developed in order to overcome the problem.

According to many studies including Ren K. et al (2011), Zeng K. (2015), Zhang J. et al. (2016) and Hamamreh J. M. et al. (2018); one of the innovative concept of channel-based security methods is to generate secret keys by exploiting the characteristics of the channel between the legitimate transmitter and receiver, while preventing eavesdroppers to access the secret data content. Badawy A. et al. (2016) states that channel-based key generation techniques are predominantly based on the assumption of channel reciprocity.

In time division duplexing (TDD) communication systems, the reciprocity property enables to generate highly correlated keys for legitimate parties because of observing the same link at the both ends of the channel. Moreover, Zhang J. et al. (2016) proposes that a key generation system should be evaluated by considering the performance metrics of randomness, key disagreement rate (KDR), and key generation rate (KGR). Further; Zhang J., Marshall A. et al. (2016) accepts randomness as a crucial characteristic for a generated key sequence.

A random key will provide a secure cryptographic system in the presence of passive eavesdropper attacks. KDR indicates the ratio of the different bits between the keys generated by each legitimate party to the length of the total key. In addition, KGR defines the quantity of key bits produced in each measurement.

For increasing KGR in secret key generation, Li G. et al. (2016) suggests using OFDM technique. Exploiting the randomness of the legitimate user's channel is a rising technology to make key cracking troublesome, as proposed in Li G. et al. (2017). According to Li G. et al. (2017) and Patwari N. et al. (2010), the reason behind the randomness of the channel can be presented as the movement of the user and object movements in the communication environment or introducing artificial components into the channel.

Artificial components such as filters are performed to increase the security in wireless communication systems. For example, in Zhang J., Marshall A. et al. (2016), a low pass filter is used to reduce the KDR and increase the SNR range of the system since cross correlation of channel measurements are impacted by noise. Further, in Khiabani Y. S. et al. (2013) a first-order digital filter is performed to map the automatic repeat request (ARQ) transmission into destination set. On the other hand, in Wu Y. et al. (2018), m-windows filtering method is used to have low key generation consistency probability of a multi-bit adaptive quantization scheme. In m-windows filtering system, a plurality of the keys are exploited to generate a key bit at the same interval and preprocessing channel eigenvalues through the m-windows helps to increase the key agreement rate. In addition, in Patwari N. et al. (2010), a finite impulse response implementation, Farrow filter, is performed as a fractional interpolation filter. Furthermore, a low pass filter is used to improve the reciprocity of the channel by reducing the noise in Zhang J. et al. (2015). In this study, low pass filter is designed to suppress the high frequency components of the estimated channel so that the correlation between legitimate transmitter's and receiver's channel estimation is improved. The low pass filter not only increases channel reciprocity, but also decreases KDR and improves the achievement of key generation. In addition, in Fang S. et al. (2017) and Fang S. (2018), a delay-weight-sum module is used for channel manipulation and this is implemented by a finite impulse response (FIR) filter. The delayed copies of the original transmitted signal are summed as if sending the signal through a real multipath channel. However, some of the mentioned methods have some drawbacks such as complexity and non-adaptivity which will make it easy to brute force attack.

For future networks such as large-scale heterogeneous wireless network key management and distribution are big issues. There will be demand in future networks to support new wireless technologies such as ULLRC, remote surgery and Internet of Things (IoT). But problems with these devices which are used in these applications are as follows: power-limitation, delay-sensitive and processing-restricted which make cryptography-based techniques fail for such type of technologies. Future networks need to support various kind of services and scenarios with different security requirements. The encryption-based method cannot provide scenario specific security. For these reasons, providing secure communication without depending on the conventional cryptography-based security solutions which their key needs to be shared in legitimate nodes is crucial.

In the state of the art, the patent document numbered CN104901795 discloses a physical layer secret key extraction method based on channel characteristics. However, in this document, it is not disclosed that receiver shares a reference signal to transmitter before communication for channel estimation. Further, it is also not disclosed that peak points, which corresponds to subcarriers, from the frequency selective channel between transmitter and receiver should be selected in order to create a cascaded channel. The document "Physical layer security schemes for MIMO systems: an overview", 14th June 2019 (2019-06-14), discloses an overview of various MIMO-based Physical layer security, PLS, techniques that target all kinds of security services namely, key generation and distribution, data confidentiality, authentication, and availability.

## Summary

The invention aims to provide a method for a secure communication method comprising a secret key generation technique. The novelty of our proposed method stems from enhancing physical layer security (PHY) by using channel-adaptive keys, after manipulating a channel by introducing an artificial component into the channel. An adaptively designed artificial component is cascaded with the legitimate user's channel. In an orthogonal frequency division multiplexing (OFDM) system, for example, subcarriers corresponding to a channel gain higher than a threshold value might be selected to extract the keys. Since the number of the selected subcarriers is adaptive, the length of the generated key sequences is changing adaptively as well. Thus, we can utilize the channel reciprocity property in a time division duplexing (TDD) system.

Different from previous works, this invention discloses a novel method by introducing an artificial component to ensure that receiver's newly created channel is highly frequency selective and its number of subcarriers corresponding to a channel gain higher than a threshold value is increased. Our method inherently extracts keys after cascading the channel between a transmitter and legitimate receiver with the newly designed artificial component. The artificial component consists of the copies of the legitimate user's channel values corresponding to the selected subcarriers. In addition, it is important to mention that since the keys are dependent on the legitimate user's cascaded channel, their length and values are changing adaptively depending on the number of the selected subcarriers. Therefore, eavesdropper cannot decode the data even if she is stronger than the legitimate user.

The proposed method can enhance physical layer security of wireless systems and it can provide secure communication without depending on the conventional cryptography-based security solutions which their key needs to be shared in legitimate nodes. This algorithm also can solve the problems in physical layer security such as key sharing in conventional methods. Plus, the proposed method is a promising way to solve some problems, such as co-located attacks and high temporal correlation, which are critical issues in secret key generation technique as Jiao L. et al. (2019) mentioned, when increasing the randomness of user's channel.

To sum up; the proposed algorithm can provide more reliable key by extracting bits from strong subcarriers (subcarriers corresponding to a channel gain higher than a threshold value). In addition, the proposed algorithm can provide high level secure key by providing adaptive length of key. By having adaptive length of key, it is too hard for eavesdropper to find the key and somehow impossible to decode the data. Besides, the proposed method can ensure secure communication without depending on the conventional cryptography based secure solutions which in these methods their secret key needs to be shared in legitimate nodes which this sharing is critical in terms of how to share this key securely. Lastly, the proposed method is applicable to ensure flexible security.

## Brief Description of the Drawings

Figure 1 shows proposed system model for secure communication in presence of a passive eavesdropper.
Figure 2 shows OFDM transceiver structure of the proposed method
Figure 3 shows the structure of the proposed channel-based key generation technique
Figure 4a shows frequency response graph of receiver's channel
Figure 4b shows frequency response graph of receiver's newly created channel
Figure 5 shows an illustration of reshaping the key for symbol encryption

## Brief Description of Reference Numbers

**[0015]**

A. Transmitter
B. Receiver
E. Eavesdropper
$s_{ref}$. Reference signal
$h_b$. Cascaded channel
$h_e$. Eavesdropper channel
$b_t$. Transmitted bits
$b_r$. Received bits
M. Modulation
DM. Demodulation
DC. Decoding
K. Key
S/P. Serial to parallel
P/S. Parallel to serial
IFFT. Inverse fast Fourier transform
FFT. Fast Fourier transform
CP. Cyclic prefix
CPR. Cyclic prefix removal
f. Frequency
G. Gain
KS. Key stream
$B_b$. Binary key
$C_b$. Complex key

EQ. Channel equalization

## Detailed Description

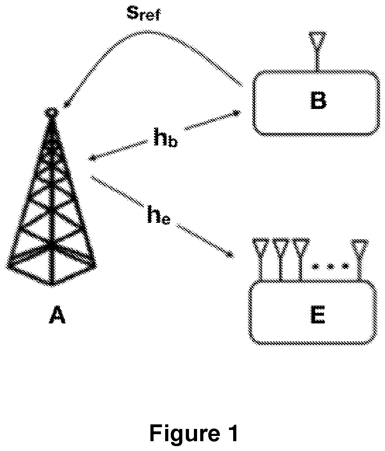

Figure 1 shows proposed system model for secure communication in presence of a passive eavesdropper. Particularly, the purpose of a transmitter (A) is to send a secret data and communicate confidentially with a legitimate user, or receiver (B) in the presence of a passive eavesdropper (E). Eavesdropper's (E) aim is to access the secret data content from the communication link between transmitter (A) and receiver (B) by its own observations of the signals it received. Besides, it is stronger than the receiver (B) by having multiple antennas, better signal processing skills, more power, hardware capabilities, processing capability, distributed reception capability, and offline processing. Its antennas are distributed where their locations are not known by the transmitter (A). It is assumed that the channels of both the receiver (B) and eavesdropper (E) are independent and uncorrelated of each other, i.e. eavesdropper (E) is located at least half wavelength away from the receiver (B). Furthermore, all received signals experience Rayleigh fading frequency selective channel. It is assumed that the transmitter (A) knows channel state information (CSI) of the receiver (B) by using the reciprocity property in a time division duplexing (TDD) system, but it doesn't have any knowledge about eavesdropper's (E) channel, since it is passive. Therefore, both channels, transmitter-to-receiver and receiver-to-transmitter, are assumed to be estimated as correlated and same with each other in TDD mode as proposed in Zhou X. et al. (2016).

In the proposed communication method, the receiver (B) sends a reference signal ($s_{ref}$) to transmitter (A) for channel estimation. Assuming N corresponds to total number of complex data symbols; the proposed method fundamentally comprises the steps of:

a. Selecting the first m point out of M number of peak-points from the frequency selective channel between transmitter (A) and receiver (B), where in points correspond to subcarriers and where in $M < N$,

b. Creating an artificial channel, $F_b \in \mathbb{C}^{Nx1}$, by using the selected m points,

c. Creating a new channel, $H_b \in \mathbb{C}^{Nx1}$, by cascading receiver's (B) channel, $A_b \in \mathbb{C}^{Nx1}$, with the artificial channel, $F_b$; as $H_b = A_b \odot F_b$,

d. Selecting peak points from the cascaded channel, $H_b$,

e. Quantization of the selected subcarriers which their gains are corresponds to the peak points from cascaded channel by transmitter (A) and receiver (B) to generate a binary key ($B_b$),

f. Converting the binary key ($B_b$) into a complex key ($C_b$),

g. Reshaping the complex key ($C_b$) to the closest multiplication of N.

In a preferred embodiment, M number of peak-points are selected where channel gain (G) is above average channel gaina (G) of all the frequency (f) indices considered by the transmitter (A) to extract keys.

In another embodiment, if the length of last key block is less than N, key samples from the head are added as a suffix to reshape the complex key ($C_b$).

Yet in another embodiment, after reshaping the complex key ($C_b$), transmitted signal, x, is sent to the receiver (B) by applying cyclic prefix (CP) to the time-domain encrypted symbols as $y_b = h_b * x + n_b$; where $y_b$ is received signal at receiver (B), $h_b$ is the cascaded channel in time-domain, and $n_b$ is the zero-mean complex additive white-Gaussian noise (AWGN) at the receiver's (B) side.

## An example implementation

In this example implementation, firstly the receiver (B) transmits a reference signal ($s_{ref}$) to the transmitter (A) for channel estimation. Thus, as an advantage of the channel reciprocity property in TDD mode, the downlink channel is obtained from its uplink as suggested in Goldsmith A. (2005).

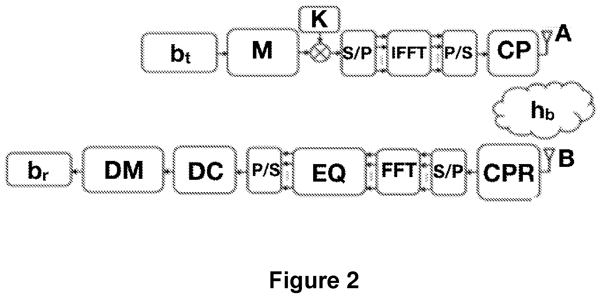

The proposed OFDM transceiver structure of the proposed method is depicted in Figure 2. Frequency-domain complex data symbols having the length of N is represented by:

$$S = [S_1, S_2, ..., S_N]$$

where $S \in \mathbb{C}^{1xN}$. These symbols, obtained by using BPSK modulation, are going to be send by the transmitter (A) to the receiver (B) in the presence the eavesdropper (E).

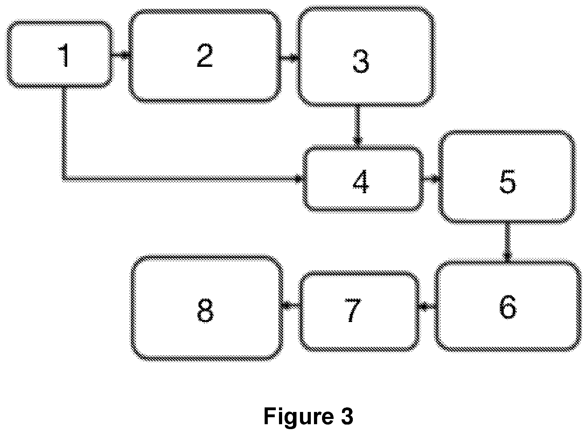

To encrypt data, a secret key is used. Generation of this key at the transmitter is illustrated in Figure 3. The frequency response of the channel experienced by the receiver (B) is denoted by $A_b \in \mathbb{C}^{Nx1}$ and by the eavesdropper (E) is by $A_e \in \mathbb{C}^{Nx1}$ where N is the channel length of each. M selected subcarriers ($M < N$) out of N points are selected from the frequency response of the receiver's (B) channel, $A_b = [A_{b1}, A_{b2}, ... , A_{bN}]^T$, of length N. These M subcarriers correspond to the points where the channel gain is above the average gain of all the frequency indices are considered by the transmitter (A) to extract the secret keys. Both to increase the number of the subcarriers corresponding to a channel gain higher than a threshold value and ensure that the channel is more selective, an artificial channel is designed by using the selected $M$ points. The values of $A_b$ at selected $M$ frequency values are copied till the length of the artificial channel, $F_b \in \mathbb{C}^{Nx1}$, equals to the length of the receiver's (B) channel, $A_b \in \mathbb{C}^{Nx1}$. A new channel for the receiver (B), $H_b \in \mathbb{C}^{Nx1}$, is created by cascading the receiver's (B) channel, $A_b \in \mathbb{C}^{Nx1}$, with the artificial channel, $F_b \in \mathbb{C}^{Nx1}$ as expressed:

$$H_b = A_b \odot F_b$$

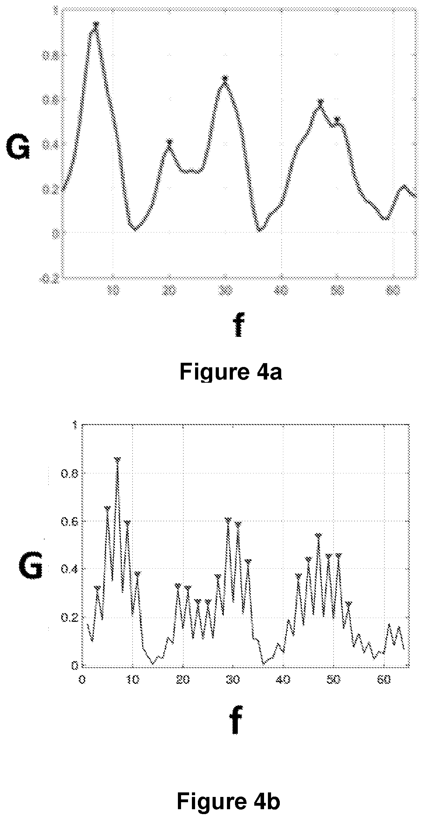

The number of selected points corresponding to the frequency indices where the channel gain values are above the average gain of all values is shown in Figure 4a and 4b. As presented in Figure 4a, the number of the selected subcarriers of the receiver's (B) channel is very less to extract keys securely. Therefore, the transmitter (A) adds an artificial component to manipulate the channel. Thus, the number of the selected parts of the cascaded channel given in Figure 4b is greater than the number of selected points in Figure 4a. After selecting subcarriers of $H_b$, the receiver's (B) enhanced channel is quantized by the transmitter (A) and the receiver (B) to construct a key. The cascaded channel gain measurements are equally divided into regions and each region is quantized into multi-bit quantization levels by the transmitter (A) and the receiver (B). Each of the highest peak points corresponds to a bit stream. Therefore, length of the generated key depends on the number of the selected peak points of the receiver's (B) cascaded channel. Since our proposed encryption is based on symbol level, the binary key for the receiver (B), $B_b \in \{0,1\}$, is converted into a complex key, $C_b$, as $i(2xB_b - 1)$. Since the length of the key is longer than the number of symbols, the key is reshaped to the closest multiplication of the total number of symbols, $N$.

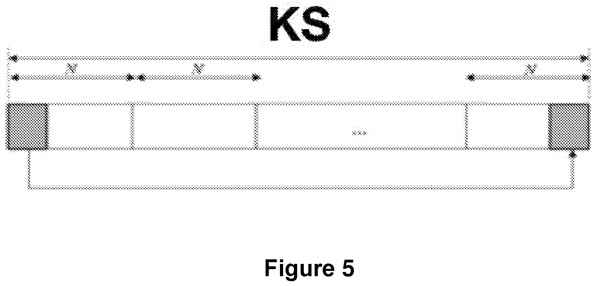

As it is seen in Figure 5, the key stream (KS), $K_b$, which has an adaptive length, is divided into multiple blocks and length of each block should be equal to the number of symbols, $N$. If the length of the last key block is less than N, the key samples from the head are added as a suffix. At transmitter's (A) side, after reshaping the key, the encrypted symbols, $E_b$, can be written as the multiplication of each key block of $K_{bi}$ with the symbols, $S$ as:

$$E_b = K_{b_i} \odot S^T$$

where $i$ = 1, ..., $n$ and $n$ is the number of key blocks. $E_b$ is reshaped to obtain a vector of encrypted symbols of length $(N \times n) \times 1$. The transmitted signal, $x$, of having an adaptive length is sent to the receiver (B), after applying cyclic prefix (CP) to the time-domain encrypted symbols to avoid inter symbol interference (ISI). The received signal at the receiver's (B) side is defined as:

$$y_b = h_b * x + n_b$$

where $h_b$ is the receiver's (B) cascaded channel in time-domain, $x$ is the transmitted signal, and $n_b$ is the zero-mean complex additive white Gaussian noise (AWGN) at the receiver (B). Since the length of $x$ is adaptive, the length of the received signal, $y_b$, is adaptive as well.

After removing cyclic prefix (CP) and then applying S/P conversion on the time-domain received signal, $y_b$, the receiver uses FFT on the resulted signal. A zero-forcing channel equalization process is performed to reduce the effects of noise from the channel for a better decoding. Thus, the received signal at the receiver's (B) side after channel equalization process is found by element-wise division of the received signal and his channel is expressed as:

$$\widehat{Y_b} = Y_b \oslash H_b$$

Where $H_b$ is the receiver's (B) cascaded channel in frequency-domain and $Y_b$ is the frequency-domain received signal after S/P conversion shown in Figure 2. After P/S conversion, the receiver (B) generates the decoded data by using the key stream (KS), $K_b$, that it extracted from its own channel and the decoded data is observed as:

$$\widehat{X_b} = \widehat{Y_b} \oslash K_b$$

The eavesdropper has access to the transmitted signal, $x$, as well. As it has stronger skills and a more versatile receiver than the receiver (B), it follows the same steps with the receiver (B) as shown in Figure 2 to generate its own keys from its channel. The eavesdropper (E) also designs an artificial component as the same way of the receiver (B) and cascades it with its channel, $A_e$, to obtain its cascaded channel, $H_e$. The signal it captures from the channel is defined as:

$$y_e = h_e * x + n_e$$

where $h_e$ is the eavesdropper's (E) cascaded channel in time-domain and $n_e$ is the zero-mean complex AWGN at the eavesdropper (E). The received signal at the eavesdropper's (E) side after channel equalization process is expressed as:

$$\widehat{Y_e} = Y_e \oslash H_e$$

where $Y_e$ is the frequency-domain received signal after S/P conversion and $H_e$ is the eavesdropper's (E) cascaded channel. The eavesdropper (E) generates the decoded data by using the key, $K_e$, it extracted from its channel and the decoded data is expressed as:

$$\widehat{X_e} = \widehat{Y_e} \oslash K_e$$

It is important to note that both the receiver (B) and the eavesdropper (E) follow the same steps as shown in Figure 2 in order to decode the secret data they received from the transmitter (A). Since the transmitter (A) transmits the data using the keys she extracted from the receiver's (B) channel, the receiver (B) can securely receive this signal in the presence of the eavesdropper (E). Although the eavesdropper (E) has multiple antennas and more skills than the receiver (B), it cannot decode the data correctly even if it extracts its own keys after manipulating its channel by adding an artificial component into it.

## References

[1] K. Ren, H. Su, and Q. Wang, "Secret key generation exploiting channel characteristics in wireless communications," IEEE Wireless Commun., vol. 18, no. 4, pp. 6-12, 2011.

[2] K. Zeng, "Physical layer key generation in wireless networks: challenges and opportunities," IEEE Commun. Mag., vol. 53, no. 6, pp. 33-39, 2015.

[3] J. Zhang, T. Q. Duong, A. Marshall, and R. Woods, "Key generation from wireless channels: A review," IEEE Access, vol. 4, pp. 614-626, 2016.

[4] J. M. Hamamreh, H. M. Furqan, and H. Arslan, "Classifications and applications of physical layer security techniques for confidentiality: A comprehensive survey," IEEE Commun. Surveys & Tut., 2018.

[5] A. Badawy, T. Elfouly, T. Khattab, C.-F. Chiasserini, A. Mohamed, and D. Trinchero, "Robust secret key extraction from channel secondary random process," Wireless Commun. Mob. Comp., vol. 16, no. 11, pp. 1389-1400, 2016.

[6] J. Zhang, A. Marshall, R. Woods, and T. Q. Duong, "Efficient key generation by exploiting randomness from channel responses of individual OFDM subcarriers," IEEE Trans. Commun., vol. 64, no. 6, pp. 2578-2588, 2016.

[7] G. Li, A. Hu, L. Peng, and C. Sun, "The optimal preprocessing approach for secret key generation from OFDM channel measurements," in IEEE Global Commun. Conf. (Globecom), 2016, pp. 1-6.

[8] G. Li, A. Hu, J. Zhang, and B. Xiao, "Security analysis of a novel artificial randomness approach for fast key generation," in IEEE Global Commun. Conf. (Globecom), 2017, pp. 1-6.

[9] N. Patwari, J. Croft, S. Jana, and S. K. Kasera, "High-rate uncorrelated bit extraction for shared secret key generation from channel measurements," IEEE Trans. Mob. Comp., vol. 9, no. 1, pp. 17-30, 2010.

[10] Y. Wu, H. Xia, and C. Cheng, "Improved multbit adaptive quantization algorithm for physical layer security based on channel charscteristics," in Int. Conf. Sys. Inf. (ICSAI), 2018, pp. 807-811.

[11] Y. S. Khiabani and S. Wei, "ARQ-based symmetric-key generation over correlated erasure channels," IEEE Trans. Inf. Forensics Sec., vol. 8, no. 7, pp. 1152-1161, 2013.

[12] J. Zhang, R. Woods, A. Marshall, and T. Q. Duong, "An effective key generation system using improved channel reciprocity," in IEEE Int. Conf. Acoust., Speech Sig. Proc. (ICASSP), 2015, pp. 1727-1731.

[13] S. Fang, I. Markwood, and Y. Liu, "Manipulatable wireless key establishment," in IEEE Conf. Commun. Net. Sec. (CNS), 2017, pp. 1-9.

[14] S. Fang, "Channel camouflage and manipulation techniques in wireless networks," PHD theses and dissertations, 2018, https://scholarcommons.usf.edu/etd/7284.

[15] L. Jiao, N. Wang, P. Wang, A. Alipour-Fanid, J. Tang, and K. Zeng, "Physical layer key generation in 5G wireless networks," IEEE Wireless Commun. Mag., 2019.

[16] X. Zhou, L. Song, and Y. Zhang, Physical Layer Security in Wireless Communications. CRC Press, 2016.

[17] A. Goldsmith, Wireless Communications. Cambridge University Press, 2005.

## Claims

1. A secure communication method, wherein receiver (B) sends a reference signal ($s_{ref}$) to transmitter (A) for channel estimation and wherein N corresponds to total number of complex data symbols; **characterized by** comprising the steps of:

   a. Selecting the first m point out of $M$ number of peak-points from the frequency selective channel between transmitter (A) and receiver (B), where in points correspond to subcarriers and where in $M < N$,

   b. Creating an artificial channel, $F_b \in \mathbb{C}^{N x 1}$, by using the selected m points,

c. Creating a new channel, $H_b \in \mathbb{C}^{Nx1}$, by cascading receiver's (B) channel, $A_b \in \mathbb{C}^{Nx1}$, with the artificial channel, $F_b$; as $H_b = A_b \odot F_b$,

d. Selecting peak points from the cascaded channel, $H_b$,

e. Quantization of the selected subcarriers which their gains are corresponds to the peak points from cascaded channel by transmitter (A) and receiver (B) to construct a binary key ($B_b$),

f. Converting the binary key ($B_b$) into a complex key ($C_b$),

g. Reshaping the complex key ($C_b$) to the closest multiplication of N.

2. The secure communication method according to Claim 1, wherein $M$ number of peak-points are selected where channel gain (G) is above average gain (G) of all the frequency (f) indices from cascaded channel, $H_b$, considered by the transmitter (A) to extract keys.

3. The secure communication method according to Claim 1, wherein; if the length of last key block is less than $N$, key samples from the head are added as a suffix to reshape the complex key ($C_b$).

4. The secure communication method according to Claim 1; wherein after reshaping the complex key ($C_b$), transmitted signal, $x$, is sent to the receiver (B) by applying cyclic prefix (CP) to the time-domain encrypted symbols as $y_b = h_b * x + n_b$; where $y_b$ is received signal at receiver (B), $h_b$ is the cascaded channel in time-domain, and $n_b$ is the zero-mean complex additive white-Gaussian noise (AWGN) at the receiver's (B) side.

**Patentansprüche**

1. Sicheres Kommunikationsverfahren, wobei der Empfänger (B) an den Sender (A) ein Referenzsignal ($s_{ref}$) für die Kanalschätzung sendet und wobei $N$ der Gesamtzahl von komplexem Datensymbol entspricht; **dadurch gekennzeichnet, dass** es die folgenden Schritte umfasst:

a. Auswahl der ersten $m$ Punkt von $M$-Nummer der Scheitelpunkten aus dem frequenzselektiven Kanal zwischen dem Sender (A) und dem Empfänger (B), wobei die Punkten den Subträgern entsprechen und wobei $M<N$ gilt,

b. Erstellen des künstlichen Kanals, $F_b \in \mathbb{C}^{Nx1}$, mittels der ausgewählten m Punkten,

c. Erstellen eines neuen Kanals, $H_b \in \mathbb{C}^{Nx1}$, durch Kaskadierung des Kanals vom Empfänger (B), $A_b \in \mathbb{C}^{Nx1}$, mit dem künstlichen Kanal, $F_b$; als $H_b = A_b \odot F_b$,

d. Auswahl der Scheitelpunkte aus dem kaskadierten Kanal, $H_b$,

e. Quantisierung der ausgewählten Subträgern, deren Gewinne den Scheitelpunkten aus kaskadiertem Kanal durch Sender (A) und Empfänger (B) zum Konstruieren eines binären Schlüssels ($B_b$) entsprechen,

f. Umwandlung des binären Schlüssels ($B_b$) in einen komplexen Schlüssel ($C_b$),

g. Umformung des komplexen Schlüssels ($C_b$) zur nächstgelegenen Multiplikation von $N$.

2. Sicheres Kommunikationsverfahren nach Anspruch 1, wobei die $M$-Nummer der Scheitelpunkten an der Stelle ausgewählt wird, wo die Kanalverstärkung (G) über dem durchschnittlichen Gewinn (G) von allen Indizien der Frequenz (f) aus kaskadiertem Kanal, $H_b$, betrachtet vom Sender (A) zum Extrahieren der Schlüssel ist.

3. Sicheres Kommunikationsverfahren nach Anspruch 1, wobei die Schlüssel-Proben aus dem Head als Suffix angefügt werden, um den komplexen Schlüssel ($C_b$) umzuformen, wenn die Länge von letztem Schlüsselblock geringer ist als $N$.

4. Sicheres Kommunikationsverfahren nach Anspruch 1, wobei nach der Umformung des komplexen Schlüssels ($C_b$) das Sendesignal, $x$, dem Empfänger (B) gesendet wird, durch Durchführung des zyklischen Präfixes (CP) zu den verschlüsselten Symbolen der Zeitdomäne als $y_b = h_b * x + n_b$, wobei $y_b$ das an dem Empfänger (B) empfangene Signal ist, $h_b$ der kaskadierte Kanal in der Zeitdomäne ist und $n_b$ das mittelwertfreie komplexe additive weiße Gaußsche Rauschen (AWGN) an der Seite des Empfängers (B) ist.

**Revendications**

1. Méthode de communication sécurisée, dans laquelle le récepteur (B) envoie un signal de référence ($s_{ref}$) à l'émetteur (A) pour l'estimation du canal et dans laquelle $N$ correspond au nombre total de symboles de données complexes ; **caractérisée en ce qu'**elle comprend les étapes suivantes :

a. Sélectionner le premier point $m$ sur un nombre $M$ de points de crête à partir du canal sélectif en fréquence entre l'émetteur (A) et le récepteur (B), dans lequel les points correspondent aux sous-porteuses et dans lequel $M < N$,

b. Créer un canal artificiel, $F_b \in \mathbb{C}^{Nx1}$, en utilisant les points m sélectionnés,

c. Créer un nouveau canal, $H_b \in \mathbb{C}^{Nx1}$, en cascadant le canal du récepteur (B), $A_b \in \mathbb{C}^{Nx1}$, avec le canal artificiel, $F_b$; comme $H_b = A_b \odot F_b$,

d. Sélectionner les points de crête à partir du canal en cascade, $H_b$,

e. Quantifier les sous-porteuses sélectionnées dont les gains correspondent aux points de crête du canal en cascade par l'émetteur (A) et le récepteur (B) pour construire une clé binaire ($B_b$),

f. Convertir la clé binaire ($B_b$) en clé complexe ($C_b$),

g. Remodeler la clé complexe ($C_b$) à la multiplication la plus proche de $N$.

2. Méthode de communication sécurisée selon la revendication 1, dans laquelle $M$ nombre de points de crête sont sélectionnés, dans laquelle le gain du canal (G) est supérieur au gain moyen (G) de tous les indices de fréquence (f) du canal en cascade, $H_b$, pris en compte par l'émetteur (A) pour extraire les clés.

3. Méthode de communication sécurisée selon la revendication 1, dans laquelle; si la longueur du dernier bloc de clé est inférieure à $N$, les échantillons de clé à partir de la tête sont ajoutés en tant que suffixe pour remodeler la clé complexe ($C_b$).

4. Méthode de communication sécurisée selon la revendication 1, dans laquelle après avoir remodelé la clé complexe ($C_b$), le signal transmis, $x$, est envoyé au récepteur (B) en appliquant un préfixe cyclique (CP) aux symboles cryptés dans le domaine temporel comme $y_b = h_b * x + n_b$; dans laquelle $y_b$ est le signal reçu au récepteur (B), $h_b$ est le canal en cascade dans le domaine temporel, et $n_b$ est le bruit blanc gaussien additif complexe à moyenne nulle (AWGN) du côté du récepteur (B).

**Figure 1**

**Figure 2**

**Figure 3**

**Figure 4a**

**Figure 4b**

**KS**

**Figure 5**

## REFERENCES CITED IN THE DESCRIPTION

### Patent documents cited in the description

- CN 104901795

### Non-patent literature cited in the description

- *Physical layer security schemes for MIMO systems: an overview,* 14 June 2019
- **K. REN ; H. SU ; Q. WANG.** Secret key generation exploiting channel characteristics in wireless communications. *IEEE Wireless Commun.,* 2011, vol. 18 (4), 6-12
- **K. ZENG.** Physical layer key generation in wireless networks: challenges and opportunities. *IEEE Commun. Mag.,* 2015, vol. 53 (6), 33-39
- **J. ZHANG ; T. Q. DUONG ; A. MARSHALL ; R. WOODS.** Key generation from wireless channels: A review. *IEEE Access,* 2016, vol. 4, 614-626
- **J. M. HAMAMREH ; H. M. FURQAN ; H. ARSLAN.** Classifications and applications of physical layer security techniques for confidentiality: A comprehensive survey. *IEEE Commun. Surveys & Tut.,* 2018
- **A. BADAWY ; T. ELFOULY ; T. KHATTAB ; C.-F. CHIASSERINI ; A. MOHAMED ; D. TRINCHERO.** Robust secret key extraction from channel secondary random process. *Wireless Commun. Mob. Comp.,* 2016, vol. 16 (11), 1389-1400
- **J. ZHANG ; A. MARSHALL ; R. WOODS ; T. Q. DUONG.** Efficient key generation by exploiting randomness from channel responses of individual OFDM subcarriers. *IEEE Trans. Commun.,* 2016, vol. 64 (6), 2578-2588
- **G. LI ; A. HU ; L. PENG ; C. SUN.** The optimal preprocessing approach for secret key generation from OFDM channel measurements. *IEEE Global Commun. Conf. (Globecom),* 2016, 1-6
- **G. LI ; A. HU ; J. ZHANG ; B. XIAO.** Security analysis of a novel artificial randomness approach for fast key generation. *IEEE Global Commun. Conf. (Globecom),* 2017, 1-6
- **N. PATWARI ; J. CROFT ; S. JANA ; S. K. KASERA.** High-rate uncorrelated bit extraction for shared secret key generation from channel measurements. *IEEE Trans. Mob. Comp.,* 2010, vol. 9 (1), 17-30
- **Y. WU ; H. XIA ; C. CHENG.** Improved mult-bit adaptive quantization algorithm for physical layer security based on channel charscteristics. *Int. Conf. Sys. Inf. (ICSAI),* 2018, 807-811
- **Y. S. KHIABANI ; S. WEI.** ARQ-based symmetric-key generation over correlated erasure channels. *IEEE Trans. Inf. Forensics Sec.,* 2013, vol. 8 (7), 1152-1161
- **J. ZHANG ; R. WOODS ; A. MARSHALL ; T. Q. DUONG.** An effective key generation system using improved channel reciprocity. *IEEE Int. Conf. Acoust., Speech Sig. Proc. (ICASSP),* 2015, 1727-1731
- **S. FANG ; I. MARKWOOD ; Y. LIU.** Manipulatable wireless key establishment. *IEEE Conf. Commun. Net. Sec. (CNS),* 2017, 1-9
- **S. FANG.** Channel camouflage and manipulation techniques in wireless networks. *PHD theses and dissertations,* 2018, https://scholarcommons.usf.edu/etd/7284
- **L. JIAO ; N. WANG ; P. WANG ; A. ALIPOUR-FANID ; J. TANG ; K. ZENG.** Physical layer key generation in 5G wireless networks. *IEEE Wireless Commun. Mag.,* 2019
- **X. ZHOU ; L. SONG ; Y. ZHANG.** Physical Layer Security in Wireless Communications. CRC Press, 2016
- **A. GOLDSMITH.** Wireless Communications. Cambridge University Press, 2005